# EUROPEAN PATENT SPECIFICATION

(11) **EP 3 793 255 B1**
(45) Date of publication and mention of the grant of the patent: **27.04.2022**
(21) Application number: 18918161.3
(22) Date of filing: 08.05.2018
(51) Int. Cl.: H04W 48/16, H04W 48/20

(54) **MEASUREMENT CONTROL METHOD, UE, NETWORK APPARATUS, AND COMPUTER STORAGE MEDIUM**
MESSSTEUERUNGSVERFAHREN, BENUTZERGERÄT, NETZWERKVORRICHTUNG UND COMPUTERSPEICHERMEDIUM
PROCÉDÉ DE COMMANDE DE MESURE, UE, APPAREIL DE RÉSEAU ET SUPPORT DE STOCKAGE INFORMATIQUE

(43) Date of publication of application: 17.03.2021
(73) Proprietor: GUANGDONG OPPO MOBILE TELECOMMUNICATIONS CORP., LTD., Dongguan Guangdong 523860 (CN)
(72) Inventor: YANG, Ning, Dongguan, Guangdong 523860 (CN)
(74) Representative: Novagraaf Technologies
(86) International application number: PCT/CN2018/086048
(87) International publication number: WO 2019/213843

(56) References cited:
- WO-A1-2012/148764
- CN-A- 101 998 579
- CN-A- 102 045 686
- CN-A- 102 196 504
- CN-A- 102 196 571
- US-A1- 2012 263 145
- ERICSSON: "ANR framework in NR", 3GPP DRAFT; R2-1710842 - ANR FRAMEWORK IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20171009 - 20171013 8 October 2017 (2017-10-08), XP051342867, Retrieved from the Internet: URL:http://www.3gpp.org/ftp/Meetings_3GPP_ SYNC/RAN2/Docs/ [retrieved on 2017-10-08]

## Description

### TECHNICAL FIELD

The present disclosure relates to the field of information processing technology, and in particular, to a measurement control method, user equipment (UE), network apparatus, and computer storage medium that determine whether a terminal performs measurement on a preset cell in an idle state by determining whether a cell belongs to a pre-configured area.

### BACKGROUND

In the 3GPP LTE system, a carrier aggregation mechanism is introduced and continuously developed. One of the enhancement directions is to speed up a configuration of a secondary cell by a network to a terminal to avoid a situation where the configuration of the secondary cell is too slow and more data needs to be transmitted through a primary cell. In the LTE system, a dedicated frequency priority may be configured when RRC connection is released, and may be implemented according to the RAT and Frequency Selection Policy (RFSP) configured by the network. In the carrier aggregation, in order to achieve a rapid configuration of the secondary cell, a dedicated signaling configuration for idle state measurement is also introduced for an idle terminal, and a timer is also set. Meanwhile, relying solely on the timer is not enough, a concept of area needs to be introduced, and a measurement configuration is effective within a specific range. The concept of area may simplify the measurement configuration mechanism, and the network does not need to allocate a plurality of frequency points of the entire PLMN or TA to the terminal, but may be within a specific range. In this case, in a conventional measurement configuration, a physical layer cell identifier is used for the cell identification. This is because the traditional measurement configuration is only for neighboring cells, and PCI confusion is not considered. The PCI confusion is a phenomenon that will exist in both LTE and 5G NR systems. The main reason is that the number of physical cell identifiers (PCIs) is much smaller than the number of cell global identifiers (CGIs). Therefore, cells with different CGIs may be configured with a same PCI. The PCI may be reused. If two or more neighboring cells of a cell use the same PCI, the PCI confusion will occur.

A problem with the prior art is that if the PCI confusion occurs, the terminal may have a misjudging, and a cell that does not belong to a certain active area may be configured due to PCI confusion, while it cannot correctly determine whether the certain cell really belongs to the active area. In the traditional LTE mechanism, for a handover purpose, a base station may require a UE to use an Automatic Neighbor Relation (ANR) reporting function to read an E-CGI from neighbor cell system information and then report it to the serving base station, thereby eliminating the PCI confusion. However, in an idle measurement mechanism of carrier aggregation, the base station configures only a PCI list for the UE. The UE is always idle during the measurement and does not interact with the base station. Even if the UE reads the system information and obtains the E-CGI, it is still impossible to correctly determine whether a cell and a cell with the same PCI in the configured PCI list really belong to the active area. Related art is also known from US application No. US2012263145A1.

### SUMMARY

The present invention is defined in the independent claims, and the preferable features according to the present invention are defined in the dependent claims. To solve the above technical problems, embodiments of the present disclosure provide a measurement control method, user equipment (UE), network apparatus, and computer storage media.

An embodiment of the present disclosure provides a measurement control method, which is applied to a UE.

An embodiment of the present disclosure provides a measurement control method, which is applied to a network apparatus.

An embodiment of the present disclosure provides a UE.

An embodiment of the present disclosure provides a network apparatus.

An embodiment of the present disclosure provides a computer storage medium that stores computer-executable instructions, and in a case where the computer-executable instructions are executed, steps of the foregoing method are implemented.

In the implementation of the embodiment of the present disclosure, a UE, determines, on the basis of a PCI list and the cell global identifier list configured at the network side, whether a cell belongs to a configured area; furthermore, on the basis of a determined result, determines whether to continue to use an idle state measurement configuration configured by dedicated signaling. In this way, it solves a problem that the UE misjudges a cell with a same PCI but does not belong to a first area where it is located, so that the UE may more accurately determine whether a reselected cell belongs to a specific area, thereby avoiding unnecessary measurement behavior of the UE caused by the misjudging.

In addition, the implementation of the present disclosure is also applicable to a 5G NR system. Both LTE and NR use the PCI as a physical layer cell identifier, and the cell global identifiers are respectively an E-UTRA Cell Global Identifier (E-CGI) and an NR Cell Global Identifier (N-CGI).

### BRIEF DESCRIPTION OF THE DRAWINGS

FIG. 1 is a schematic flowchart of a measurement control method according to the present disclosure;
FIG. 2 is a schematic diagram of a scenario where PCI confusion occurs;
FIG. 3 is a schematic structural diagram of a UE according to the present disclosure;
FIG. 4 is a schematic structural diagram of a network apparatus according to the present disclosure; and
FIG. 5 is a schematic diagram of a hardware architecture according to the present disclosure.

### DETAILED DESCRIPTION

In order to understand the features and technical contents of the embodiments of the present disclosure in more detail, the following describes the implementation of the embodiments of the present disclosure in detail with reference to the drawings. The accompanying drawings are for reference only and are not intended to limit the embodiments of the present disclosure.

### Embodiment 1

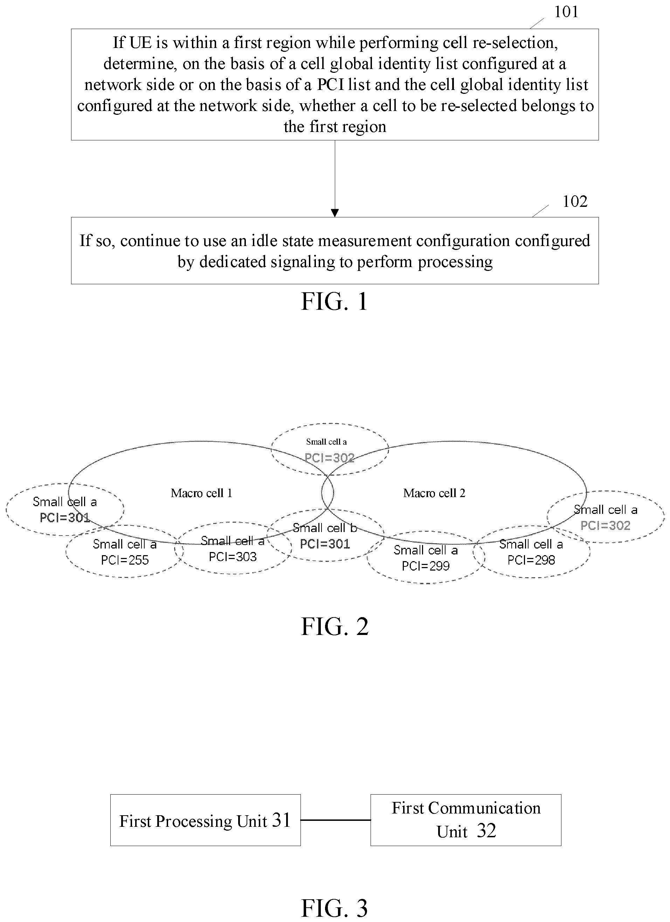

An embodiment of the present disclosure provides a measurement control method, which is applied to a UE. As shown in FIG. 1, the method includes:

Step 101, if the UE is within a first area while performing cell re-selection, determine, on the basis of a cell global identifier list configured at a network side or on the basis of a Physical Cell Identifier (PCI) list and the cell global identifier list configured at the network side, whether a cell to be re-selected belongs to the first area;

Step 102, if so, continue to use an idle state measurement configuration configured by dedicated signaling to perform processing.

It should be noted that the embodiments of the present disclosure may be applied to various communication systems, such as: a Global System of Mobile Communication (GSM) system, a Code Division Multiple Access (CDMA) system, a Wideband Code Division Multiple Access (WCDMA) system, a General Packet Radio Service (GPRS), a Universal Mobile Telecommunication System (UMTS), an LTE system and LTE system evolution system (e.g., an Advanced Long Term Evolution (LTE-A) system), an NR system and NR system evolution system (e.g., an NR-based access to Unlicensed spectrum (NR-U)), or a next-generation communication system, etc.

A User Equipment (UE) may be a STAION (ST) in a Wireless Local Area Network (WLAN), and may be a cellular phone, a cordless phone, a Session Initiation Protocol (SIP) phone, a Wireless Local Loop (WLL) station, a Personal Digital Assistant (PDA) device, a handheld device with a wireless communication function, a computing device or other processing devices connected to a wireless modem, an vehicle-mounted device, a wearable device and a next-generation communication system, such as: a terminal device in a fifth-generation (5G) network or a terminal device in a Public Land Mobile Network (PLMN) that will evolve in the future, etc.

The above network side may be understood as a network apparatus in the network, which may be an apparatus for communicating with a mobile device, and the network apparatus may be an Access Point (AP) in a WLAN, a Base Transceiver Station (BTS) in GSM or CDMA, and may also be a NodeB (NB) in WCDMA, or an Evolutional Node B (eNB or eNodeB) in LTE, or a relay station or access point, or a vehicle-mounted device, a wearable device and a network apparatus in the NR network or a network apparatus in the PLMN that will evolve in the future.

In the embodiment of the present disclosure, the network apparatus may provide services for the cell, and the UE communicates with the network apparatus through transmission resources (e.g., frequency domain resources, or spectrum resources) used by the cell, and the cell may be a cell corresponding to a network apparatus (e.g., a base station), the cell may belong to a macro base station, or may belong to a base station corresponding to a small cell. The small cell may include: a Metro cell, a Micro cell, a Pico cell, a Femto cell, etc.

It should be noted that the network side may only send the PCI list to the UE side, but this process will not be described in detail in this embodiment.

Before the aforementioned Step 101, the method further needs to include: obtaining the cell global identifier list configured by the network side through RRC signaling, or the configured PCI list and the cell global identifier list.

Specifically, the base station may send the PCI list + the cell global identifier list to the UE; further, the implementations provided by the embodiments of the present disclosure are also applicable to 5G NR systems. Both LTE and NR use the PCI as a physical layer cell identifier, and the cell global identifier may be an E-UTRA Cell Global Identifier (E-CGI) and an NR Cell Global Identifier (N-CGI), respectively. In the LTE system or 5G NR system, the E-CGI or N-CGI sent by the base station may be optional.

At the UE side, if the network side configures the cell global identifier list for the UE side, when the UE is within a first area while performing cell re-selection, determining whether a cell to be re-selected belongs to the first area on the basis of a cell global identifier list configured at a network side, or on the basis of a PCI list and the cell global identifier list configured at the network side, may include the process that follows.

### Type 1:

If the UE is within the first area and a timer has not expired, determine whether a PCI of the cell is in the PCI list configured at the network side while performing the cell re-selection; if the PCI of the cell is not in the PCI list, determine that the cell does not belong to the first area.

That is, if the UE has not left the first area and the timer has not expired, then, when the UE determines whether a cell belongs to a configured active area during a re-selection process, if a value of the PCI is different from any value in the configured PCI list, determine that the cell must not belong to the first area.

Type 2: If the UE is within the first area and the timer has not expired, determine whether a PCI of the cell is in the PCI list configured at the network side, and determine whether a cell global identifier of the cell is the same as the cell global identifier configured at the network side while performing the cell re-selection;

if the PCI of the cell is in the PCI list configured at the network side, and the cell global identifier of the cell is the same as the cell global identifier configured at the network side, determine that the cell belongs to the first area.

It should be further explained that the method for the UE to obtain the global identifier of the cell may be reading from a system message sent by the network side. More specifically, the cell global identifier may be read from SIB 1 in the system message sent by the network side; for example, E-CGI and N-CGI.

That is, if the UE has not left the first area and the timer has not expired, during the cell re-selection process, if the value of the PCI is the same as a PCI value in the configured PCI list, the UE needs to read SIB 1 and obtain E-CGI to further compare whether the cell belongs to this first area;
if there is a same identifier in the E-CGI of the cell read by the UE and the E-CGI list configured at the network side, it is determined that the cell belongs to the first area.

Type 3: When performing the cell re-selection, if a reselected cell is not within the first area and/or the timer expires, determine that the UE leaves the first area.

That is, if the UE finds that a cell that does not belong to the first area is reselected or the timer expires, it considers that the UE has left the first area.

Further, if the base station is only configured with an E-CGI list (e.g., with an inactive state), the terminal needs to always read the E-CGI.

It should be understood that in an implementation provided in this embodiment, the first area may be an active area, but it is not only suitable for an active area of carrier aggregation idle state measurement, but also suitable for other areas, such as an inactive area like a RAN Area, a Tracking Area (TA), a Registration Area (RA), etc., which is no longer exhaustive here.

Regarding a process of adding a CGI, that is, the cell global identifier, to a cell list (Cell list r-15), the following methods may be adopted:

```
  IdleModeMeasurementConfigDedicated-rl5 ::= SEQUENCE {
  idleMeasuredCarriersEUTRA-rl5 EUTRA-CarrierList-rl5
 OPTIONAL, -- Need OR
  idleMeasurementDuration-rl5 ENUMERATED {sec10, sec30, sec60,
 sec120, sec180, sec240, sec300},
  validityArea-rl5 CellList-rl5 OPTIONAL -
 Need OR
  ...
  }
  CellList-rl5 ::= SEQUENCE (SIZE (1.. maxCellMeasIdle-rl5)) OF
 validCellList
  validCellList:= SEQUENCE {
  physicalCellID ,
  cellGlobalId CellGlobalIdEUTRA, OPTIONAL
  }
```

On the basis of the foregoing description, this embodiment may further include:
sending information of a cell where PCI confusion occurs to the network side; wherein, the information of the cell where the PCI confusion occurs includes at least: a PCI and a cell global identifier of the cell; receiving reconfiguration information for the cell where the PCI confusion occurs sent by the network side; wherein, the reconfiguration information includes a reconfigured PCI of the cell where the PCI confusion occurs.

For a scenario where the PCI confusion occurs, please refer to FIG. 2, for example, an area of Macro cell 1 contains two Small cells with PCI=301; in an area of Macro cell 2, there are two Small cells with PCI=302. It may be considered that the above two Small cells with PCI=301 and 302 will have the PCI confusion.

If the terminal finds that misjudging of the active area may be caused by PCI detection alone due to the PCI confusion, the terminal reports the information of the cell where the PCI confusion occurs to the network side, and triggers the network side to reconfigure a PCI of the cell. When reporting, the terminal reports the PCI + E-CGI of the cell to the network together to assist the network in locating which cell has the PCI confusion.

In addition, the foregoing Step 102 may further include: if determining that the UE has left the first area, not using the idle state measurement configuration configured by the dedicated signaling of the first area.

It should be understood that, in this embodiment, the E-CGI is mainly used for illustration, but when this embodiment is applied to a 5G NR system, the E-CGI may be replaced with the N-CGI, and the processing method is the same as that of this embodiment, which will not be repeated here.

It may be seen that by the above implementations, the UE, determines, on the basis of the cell global identifier list configured at the network side, or on the basis of the configured PCI list and cell global identifier list, whether the cell belongs to the configured area; furthermore, according to the determined result, determines whether to continue to use the idle signal measurement configuration configured by the dedicated signaling. In this way, it solves a problem that the UE misjudges a cell with a same PCI but does not belong to a first area where it is located, so that the UE may more accurately determine whether a reselected cell belongs to a specific area, thereby avoiding unnecessary measurement behavior of the UE caused by the misjudging.

### Embodiment 2

An embodiment of the present disclosure provides a measurement control method, which is applied to a network apparatus, and the method includes:
configuring a UE with a cell global identifier list, or with a PCI list and the cell global identifier list.

Specifically, the UE may be configured with the cell global identifier list, or with the PCI list and the cell global identifier list through RRC signaling.

It should be noted that the embodiments of the present disclosure may be applied to various communication systems, such as: a Global System of Mobile Communication (GSM) system, a Code Division Multiple Access (CDMA) system, a Wideband Code Division Multiple Access(WCDMA) system, General Packet Radio Service (GPRS), a Universal Mobile Telecommunication System (UMTS), an LTE system and LTE system evolution system (e.g., an Advanced long term evolution (LTE-A) system), an NR system and NR system evolution system (e.g., an NR-based access to Unlicensed spectrum (NR-U) system), or a next-generation communication system, etc.

A User Equipment (UE) may be a STAION (ST) in a Wireless Local Area Network (WLAN), and may be a cellular phone, a cordless phone, a Session Initiation Protocol (SIP) phone, a Wireless Local Loop (WLL) station, a Personal Digital Assistant (PDA) device, a handheld device with a wireless communication function, a computing device or other processing device connected to a wireless modem, an vehicle-mounted device, a wearable device and the next-generation communication system, such as, a terminal device in a fifth-generation (5G) network or a terminal device in a Public Land Mobile Network (PLMN) that will evolve in the future.

The above network side may be understood as a network apparatus in the network, which may be an apparatus for communicating with a mobile device, and the network apparatus may be an Access Point (AP) in a WLAN, a Base Transceiver Station (BTS) in GSM or CDMA, and may also be a NodeB (NB) in WCDMA, or an Evolutional Node B (eNB or eNodeB) in LTE, or a relay station or access point, or a vehicle-mounted device, a wearable device and a network apparatus in the NR network or a network apparatus in the PLMN that will evolve in the future.

In the embodiment of the present disclosure, the network apparatus may provide services for the cell, and the UE communicates with the network apparatus through transmission resources (e.g., frequency domain resources, or spectrum resources) used by the cell, and the cell may be a cell corresponding to a network apparatus (e.g., a base station), the cell may belong to a macro base station, or may belong to a base station corresponding to a small cell. The small cell may include: a Metro cell, a Micro cell, a Pico cell, a Femto cell, etc.

It should be noted that the network side may only send a PCI list to a UE side, but this process will not be described in detail in this embodiment.

Specifically, the base station may send the PCI list + the cell global identifier list to the UE; further, the implementations provided by the embodiments of the present disclosure are also applicable to 5G NR systems. Both LTE and NR use the PCI as a physical layer cell identifier, and the cell global identifier may be an E-UTRA Cell Global Identifier (E-CGI) and an NR Cell Global Identifier (N-CGI), respectively. In the LTE system or 5G NR system, the E-CGI or N-CGI sent by the base station may be optional.

It should be understood that in an implementation provided in this embodiment, the first area may be an active area, but it is not only suitable for an active area of carrier aggregation idle state measurement, but also suitable for other areas, such as a RAN Area with an inactive state, a Tracking Area (TA), a Registration Area (RA), etc., which is no longer exhaustive here.

Regarding a process of adding a CGI, that is, the cell global identifier, to a cell list (Cell list r-15), the following methods may be adopted:

```
  IdleModeMeasurementConfigDedicated-rl5 ::= SEQUENCE {
  idleMeasuredCarriersEUTRA-rl5 EUTRA-CarrierList-rl5
 OPTIONAL, -- Need OR
  idleMeasurementDuration-rl5 ENUMERATED {sec10, sec30, sec60,
 sec120, sec180, sec240, sec300},
  validityArea-rl5 CellList-rl5 OPTIONAL --
 Need OR
  ...
  }
  CellList-rl5 ::= SEQUENCE (SIZE (1.. maxCellMeasIdle-rl5)) OF
 validCellList
  validCellList:= SEQUENCE {
  physicalCellID PhysicalCellID,
  cellGlobalId CellGlobalIdEUTRA, OPTIONAL
  }
```

On the basis of the foregoing description, this embodiment further includes:
the network apparatus receives, from the UE, information of a cell where PCI confusion occurs, wherein, the information of the cell where the PCI confusion occurs includes at least: a PCI and a cell global identifier of the cell;
sending reconfiguration information for the cell where the PCI confusion occurs to the UE; wherein, the reconfiguration information includes at least: a PCI and a cell global identifier of a reconfigured PCI of the cell where the PCI confusion occurs.

For a scenario where the PCI confusion occurs, please refer to FIG. 2, for example, an area of Macro cell 1 contains two Small cells with PCI=301; in an area of Macro cell 2, there are two Small cells with PCI=302. It may be considered that the above two Small cells with PCI=301 and 302 will have the PCI confusion.

If the terminal finds that misjudging of the active area may be caused by PCI detection alone due to the PCI confusion, the terminal reports the information of the cell where the PCI confusion occurs to the network side, and triggers the network side to reconfigure a PCI of the cell. When reporting, the terminal reports the PCI + E-CGI of the cell to the network together to assist the network in locating which cell has the PCI confusion.

At the network apparatus, the following processing is further included:
if the PCI confusion is occurred in the first area where the UE is located, configuring the UE with the cell global identifier list, or with the PCI list and the cell global identifier list;
   or,
if no PCI confusion is occurred in the first area where the UE is located, only configuring the UE with the PCI list.

A basis for the network to determine whether an E-CGI is configured in the active area may be whether there is the PCI confusion in an area configured for the UE, if yes, the E-CGI is configured, and if not, no configuration is required. Compared with simply configuring the E-CGI, using PCI + E-CGI, may firstly determine if it has left the current area by whether the PCI is same, while it is unnecessary to read system information. Of course, this benefit may only be more obvious when the area is not large. In addition, the method of determining whether the UE has the PCI confusion within the first area may report the PCI confusion for the UE, for example, reporting PCI confusion information sent in a cell within the first area, and so on.

It should be understood that, in this embodiment, the E-CGI is mainly used for illustration, but when this embodiment is applied to a 5G NR system, the E-CGI may be replaced with the N-CGI, and the processing method is the same as that of this embodiment, which will not be repeated here.

It may be seen that by adopting the above implementations, the UE, determines, on the basis of the cell global identifier list configured at the network side, or on the basis of the configured PCI list and cell global identifier list, whether the cell belongs to the configured area; furthermore, according to the determined result, determines whether to continue to use the idle signal measurement configuration configured by the dedicated signaling. In this way, it solves a problem that the UE misjudges a cell with a same PCI but does not belong to a first area where it is located, so that the UE may more accurately determine whether a reselected cell belongs to a specific area, thereby avoiding unnecessary measurement behavior of the UE caused by the misjudging.

### Embodiment 3

An embodiment of the present disclosure provides a UE. As shown in FIG. 3, the UE includes:
a first processing unit 31, configured to: if within a first area while performing cell re-selection, determine, on the basis of a cell global identifier list configured at a network side, or on the basis of a PCI list and the cell global identifier list configured at the network side, whether a cell to be re-selected belongs to the first area; if so, continue to use an idle state measurement configuration configured by dedicated signaling to perform processing.

It should be noted that the embodiments of the present disclosure may be applied to various communication systems, such as: a Global System of Mobile Communication (GSM) system, a Code Division Multiple Access (CDMA) system, a Wideband Code Division Multiple Access (WCDMA) system, a General Packet Radio Service (GPRS), a Universal Mobile Telecommunication System (UMTS), an LTE system and LTE system evolution system (e.g., an Advanced Long Term Evolution (LTE-A) system), an NR system and NR system evolution system (e.g., an NR-based access to Unlicensed spectrum (NR-U)), or a next-generation communication system, etc.

A User Equipment (UE) may be a STAION (ST) in a Wireless Local Area Network (WLAN), and may be a cellular phone, a cordless phone, a Session Initiation Protocol (SIP) phone, a Wireless Local Loop (WLL) station, a Personal Digital Assistant (PDA) device, a handheld device with a wireless communication function, a computing device or other processing devices connected to a wireless modem, an vehicle-mounted device, a wearable device and a next-generation communication system, such as: a terminal device in a fifth-generation (5G) network or a terminal device in a Public Land Mobile Network (PLMN) that will evolve in the future, etc.

The above network side may be understood as a network apparatus in the network, which may be an apparatus for communicating with a mobile device, and the network apparatus may be an Access Point (AP) in a WLAN, a Base Transceiver Station (BTS) in GSM or CDMA, and may also be a NodeB (NB) in WCDMA, or an Evolutional Node B (eNB or eNodeB) in LTE, or a relay station or access point, or a vehicle-mounted device, a wearable device and a network apparatus in the NR network or a network apparatus in the PLMN that will evolve in the future.

In the embodiment of the present disclosure, the network apparatus may provide services for the cell, and the UE communicates with the network apparatus through transmission resources (e.g., frequency domain resources, or spectrum resources) used by the cell, and the cell may be a cell corresponding to a network apparatus (e.g., a base station), the cell may belong to a macro base station, or may belong to a base station corresponding to a small cell. The small cell may include: a Metro cell, a Micro cell, a Pico cell, a Femto cell, etc.

It should be noted that the network side may only send the PCI list to the UE side, but this process will not be described in detail in this embodiment.

The UE further includes: a first communication unit 32, configured to obtain the PCI and the cell global identification list configured at the network side through RRC signaling.

Specifically, the base station may send the PCI list + the cell global identifier list to the UE; further, the implementations provided by the embodiments of the present disclosure are also applicable to 5G NR systems. Both LTE and NR use the PCI as a physical layer cell identifier, and the cell global identifier may be an E-UTRA Cell Global Identifier (E-CGI) and an NR Cell Global Identifier (N-CGI), respectively. In the LTE system or 5G NR system, the E-CGI or N-CGI sent by the base station may be optional.

If the network side configures the cell global identifier list for the UE side, then, if the UE is within a first area while performing cell re-selection, on the basis of a cell global identifier list configured at a network side, or on the basis of a PCI list and the cell global identifier list configured at the network side, whether a cell to be re-selected belongs to the first area is determined, and the following processes may exist.

### First:

The first processing unit 31, is configured to: if the UE is within the first area and a timer has not expired, if the UE performs the cell re-selection, determine whether a PCI of the cell is in the PCI list configured at the network side; if the PCI of the cell is not in the PCI list, determine that the cell does not belong to the first area.

That is, if the UE has not left the first area and the timer has not expired, then, when the UE determines whether a cell belongs to a configured active area during a re-selection process, if a value of the PCI is different from any value in the configured PCI list, determine that the cell must not belong to the first area.

Second: The first processing unit 31 is configured to: if the UE is within the first area and a timer has not expired, if the UE performs the cell re-selection, determine whether a PCI of the cell is in the PCI list configured at the network side, and determine whether a cell global identifier of the cell is the same as the cell global identifier configured at the network side;
if the PCI of the cell is in the PCI list configured at the network side, and the cell global identifier of the cell is the same as the cell global identifier configured at the network side, determine that the cell belongs to the first area.

It should be further explained that the method for the UE to obtain the global identifier of the cell may be read from a system message sent by the network side. More specifically, the cell global identifier may be read from SIB 1 in the system message sent by the network side; for example, E-CGI.

That is, if the UE has not left the first area and the timer has not expired, during the cell re-selection process, if the value of the PCI is the same as a PCI value in the configured PCI list, the UE needs to read SIB 1 and obtain E-CGI to further compare whether the cell belongs to this first area;
if there is a same identifier in the E-CGI of the cell read by the UE and the E-CGI list configured at the network side, it is determined that the cell belongs to the first area.

Third: The first processing unit 31 is configured to: when performing the cell re-selection, if a reselected cell is not within the first area and/or the timer expires, determine that the UE leaves the first area.

That is, if the UE finds that a cell that does not belong to the first area is reselected or the timer expires, it considers that the UE has left the first area.

Further, if the base station is only configured with an E-CGI list (e.g., with an inactive state), the terminal needs to always read the E-CGI.

It should be understood that in an implementation provided in this embodiment, the first area may be an active area, but it is not only suitable for an active area of carrier aggregation idle state measurement, but also suitable for other areas, such as a RAN Area with an inactive state, a Tracking Area (TA), a Registration Area (RA), etc., which is no longer exhaustive here.

Regarding a process of adding a CGI, that is, the cell global identifier, to a cell list (Cell list r-15), the following methods may be adopted:

```
  IdleModeMeasurementConfigDedicated-rl5 ::= SEQUENCE {
  idleMeasuredCarriersEUTRA-rl5 EUTRA-CarrierList-rl5
 OPTIONAL, -- Need OR
  idleMeasurementDuration-rl5 ENUMERATED {sec10, sec30, sec60,
 sec120, sec180, sec240, sec300},
  validityArea-rl5 CellList-rl5 OPTIONAL --
 Need OR
  ...
  }
  CellList-rl5 ::= SEQUENCE (SIZE (1.. maxCellMeasIdle-rl5)) OF
 validCellList
  validCellList:= SEQUENCE {
  physicalCellID PhysicalCellID,
  cellGlobalId CellGlobalIdEUTRA, OPTIONAL
  }
```

On the basis of the foregoing description, this embodiment may further include:
The first communication unit 32, is configured to: send information of a cell where PCI confusion occurs to the network side; wherein, the information of the cell where the PCI confusion occurs includes at least: a PCI and a cell global identifier of the cell; receive reconfiguration information for the cell where the PCI confusion occurs sent by the network side; wherein, the reconfiguration information includes a PCI of a reconfigured PCI of the cell where the PCI confusion occurs.

For a scenario where the PCI confusion occurs, please refer to FIG. 2, for example, an area of Macro cell 1 contains two Small cells with PCI=301; in an area of Macro cell 2, there are two Small cells with PCI=302. It may be considered that the above two Small cells with PCI=301 and 302 will have the PCI confusion.

If the terminal finds that misjudging of the active area may be caused by PCI detection alone due to the PCI confusion, the terminal reports the information of the cell where the PCI confusion to the network side, and triggers the network side to reconfigure a PCI of a cell. When reporting, the terminal reports the PCI + E-CGI of the cell to the network together to assist the network in locating which cell has the PCI confusion.

In addition, the first processing unit 31 is configured to: if determining that the UE has left the first area, not use the idle state measurement configuration configured by the dedicated signaling of the first area.

It should be understood that, in this embodiment, the E-CGI is mainly used for illustration, but when this embodiment is applied to a 5G NR system, the E-CGI may be replaced with the N-CGI, and the processing method is the same as that of this embodiment, which will not be repeated here.

It may be seen that by adopting the above implementations, the UE, determines, on the basis of the cell global identifier list configured at the network side, or on the basis of the configured PCI list and cell global identifier list, whether the cell belongs to the configured area; furthermore, according to the determined result, determines whether to continue to use the idle signal measurement configuration configured by the dedicated signaling. In this way, it solves a problem that the UE misjudges a cell with a same PCI but does not belong to a first area where it is located, so that the UE may more accurately determine whether a reselected cell belongs to a specific area, thereby avoiding unnecessary measurement behavior of the UE caused by the misjudging.

### Embodiment 4

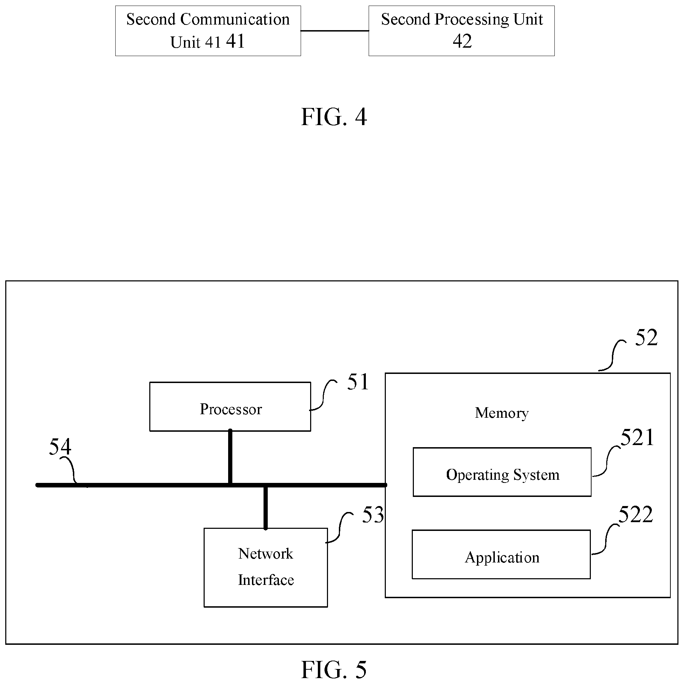

An embodiment of the present disclosure provides a network apparatus, as shown in FIG. 4, including:
a second communication unit 41, configured to: configure a UE with a cell global identifier list, or with a PCI list and the cell global identifier list.

The second communication unit 41 is specifically configure to: configure the UE with the cell global identifier list, or with the PCI list and the cell global identifier list through RRC signaling.

It should be noted that the embodiments of the present disclosure may be applied to various communication systems, such as: a Global System of Mobile Communication (GSM) system, a Code Division Multiple Access (CDMA) system, a Wideband Code Division Multiple Access(WCDMA) system, General Packet Radio Service (GPRS), a Universal Mobile Telecommunication System (UMTS), an LTE system and LTE system evolution system (e.g., an Advanced long term evolution (LTE-A) system), an NR system and NR system evolution system (e.g., an NR-based access to Unlicensed spectrum (NR-U) system), or a next-generation communication system, etc.

A User Equipment (UE) may be a STAION (ST) in a Wireless Local Area Network (WLAN), and may be a cellular phone, a cordless phone, a Session Initiation Protocol (SIP) phone, a Wireless Local Loop (WLL) station, a Personal Digital Assistant (PDA) device, a handheld device with a wireless communication function, a computing device or other processing device connected to a wireless modem, an vehicle-mounted device, a wearable device and the next-generation communication system, such as, a terminal device in a fifth-generation (5G) network or a terminal device in a Public Land Mobile Network (PLMN) that will evolve in the future.

The above network side may be understood as a network apparatus in the network, which may be an apparatus for communicating with a mobile device, and the network apparatus may be an Access Point (AP) in a WLAN, a Base Transceiver Station (BTS) in GSM or CDMA, and may also be a NodeB (NB) in WCDMA, or an Evolutional Node B (eNB or eNodeB) in LTE, or a relay station or access point, or a vehicle-mounted device, a wearable device and a network apparatus in the NR network or a network apparatus in the PLMN that will evolve in the future.

In the embodiment of the present disclosure, the network apparatus may provide services for the cell, and the UE communicates with the network apparatus through transmission resources (e.g., frequency domain resources, or spectrum resources) used by the cell, and the cell may be a cell corresponding to a network apparatus (e.g., a base station), the cell may belong to a macro base station, or may belong to a base station corresponding to a small cell. The small cell may include: a Metro cell, a Micro cell, a Pico cell, a Femto cell, etc.

It should be noted that the network side may only send a PCI list to a UE side, but this process will not be described in detail in this embodiment.

Specifically, the base station may send the PCI list + the cell global identifier list to the UE; further, the implementations provided by the embodiments of the present disclosure are also applicable to 5G NR systems. Both LTE and NR use the PCI as a physical layer cell identifier, and the cell global identifier may be an E-UTRA Cell Global Identifier (E-CGI) and an NR Cell Global Identifier (N-CGI), respectively. In the LTE system or 5G NR system, the E-CGI or N-CGI sent by the base station may be optional.

It should be understood that in an implementation provided in this embodiment, the first area may be an active area, but it is not only suitable for an active area of carrier aggregation idle state measurement, but also suitable for other areas, such as a RAN Area with an inactive state, a Tracking Area (TA), a Registration Area (RA), etc., which is no longer exhaustive here.

Regarding a process of adding a CGI, that is, the cell global identifier, to a cell list (Cell list r-15), the following methods may be adopted:

```
  IdleModeMeasurementConfigDedicated-rl5 ::= SEQUENCE {
  idleMeasuredCarriersEUTRA-rl5 EUTRA-CarrierList-rl5
 OPTIONAL, -- Need OR
  idleMeasurementDuration-rl5 ENUMERATED {sec10, sec30, sec60,
 sec120, sec180, sec240, sec300},
  validityArea-rl5 CellList-rl5 OPTIONAL --
 Need OR
  ...
  }
  CellList-rl5 ::= SEQUENCE (SIZE (1.. maxCellMeasIdle-r15)) OF
 validCellList
  validCellList:= SEQUENCE {
  physicalCellID PhysicalCellID,
  cellGlobalId CellGlobalIdEUTRA, OPTIONAL
  }
```

On the basis of the foregoing description, this embodiment may further include:
The second communication unit 41, is configured to: receive, from the UE, information of a cell where PCI confusion occurs, wherein, the information of the cell where the PCI confusion occurs includes at least: a PCI and a cell global identifier of the cell;
send reconfiguration information for the cell where the PCI confusion occurs to the UE; wherein, the reconfiguration information includes at least: a PCI and a cell global identifier of a reconfigured PCI of the cell where the PCI confusion occurs.

For a scenario where the PCI confusion occurs, please refer to FIG. 2, for example, an area of Macro cell 1 contains two Small cells with PCI=301; in an area of Macro cell 2, there are two Small cells with PCI=302. It may be considered that the above two Small cells with PCI=301 and 302 will have the PCI confusion.

If the terminal finds that misjudging of the active area may be caused by PCI detection alone due to the PCI confusion, the terminal reports the information of the cell where the PCI confusion to the network side, and triggers the network side to reconfigure a PCI of a cell. When reporting, the terminal reports the PCI + E-CGI of the cell to the network together to assist the network in locating which cell has the PCI confusion.

The network apparatus further includes:
a second processing unit 42, configured to: if the PCI confusion is occurred in the first area where the UE is located, configuring the UE with the cell global identifier list, or with the PCI list and the cell global identifier list;
   or,
the second processing unit 42, is configured to: if no PCI confusion is occurred in the first area where the UE is located, only configuring the UE with the PCI list.

A basis for the network to determine whether an E-CGI is configured in the active area may be whether there is the PCI confusion in an area configured for the UE, if yes, the E-CGI is configured, and if not, no configuration is required. Compared with simply configuring the E-CGI, using PCI + E-CGI, may firstly determine if it has left the current area by whether the PCI is same, while it is unnecessary to read system information. Of course, this benefit may only be more obvious when the area is not large. In addition, the method of determining whether the UE has the PCI confusion within the first area may report the PCI confusion for the UE, for example, reporting PCI confusion information sent in a cell within the first area, and so on.

It should be understood that, in this embodiment, the E-CGI is mainly used for illustration, but when this embodiment is applied to a 5G NR system, the E-CGI may be replaced with the N-CGI, and the processing method is the same as that of this embodiment, which will not be repeated here.

It may be seen that by adopting the above implementations, the UE, determines, on the basis of the cell global identifier list configured at the network side, or on the basis of the configured PCI list and cell global identifier list, whether the cell belongs to the configured area; furthermore, according to the determined result, determines whether to continue to use the idle signal measurement configuration configured by the dedicated signaling. In this way, it solves a problem that the UE misjudges a cell with a same PCI but does not belong to a first area where it is located, so that the UE may more accurately determine whether a reselected cell belongs to a specific area, thereby avoiding unnecessary measurement behavior of the UE caused by the misjudging.

An embodiment of the present disclosure further provides a hardware composition architecture of a UE or network apparatus, as shown in FIG. 5, including: at least one processor 51, a memory 52, and at least one network interface 53. The various components are coupled together via a bus system 54. Understandably, the bus system 54 is used to implement connection and communication between these components. In addition to a data bus, the bus system 54 further includes a power bus, a control bus, and a status signal bus. However, for the sake of clarity, various buses are marked as the bus system 54 in FIG. 5.

It may be understood that the memory 52 in the embodiment of the present disclosure may be a volatile memory or a non-volatile memory, or may include both volatile and non-volatile memory.

In some embodiments, the memory 52 stores the following elements, executable modules or data structures, or their subsets, or their extensions:
an operating system 521 and an application 522.

The processor 51 is configured to be able to process the method steps of Embodiment 1 or 2, which will not be repeated here.

If the above apparatus in the embodiment of the present disclosure is implemented in the form of a software function module and sold or used as an independent product, it may also be stored in a computer-readable storage medium. Based on this understanding, the implementations of the embodiments of the present disclosure may be embodied in the form of software products in essence or part of contributions to the existing technology. The computer software product is stored in a storage medium and includes several instructions for a computer device (which may be a personal computer, server, or network apparatus, etc.) executes all or part of the methods described in the embodiments of the present disclosure. The foregoing storage media include various media that may store program codes, such as a U disk, a mobile hard disk, a Read Only Memory (ROM), a magnetic disk, or an optical disk. In this way, the embodiments of the present disclosure are not limited to any specific combination of hardware and software.

An embodiment of the present disclosure provides a computer storage medium that stores computer-executable instructions. When the computer-executable instructions are executed, the method steps of the foregoing Embodiment 1 or 2 are implemented.

## Claims

1. A measurement control method, applied to a user equipment, UE, wherein the method comprises:
if the UE is within a first area while performing cell re-selection, sending to a network side information of a cell where physical cell identifier, PCI, confusion occurs, wherein, the information of the cell where the PCI confusion occurs comprises at least: a PCI and a cell global identifier of the cell, receiving, a PCI list and a cell global identifier list configured at the network side, determining (101), on the basis of the PCI list and the cell global identifier list, whether a cell to be re-selected belongs to the first area; and
if it is determined that the cell to be re-selected belongs to the first area, continuing to use (102) an idle state measurement configuration configured by dedicated signaling to perform processing.

2. The method according to claim 1, wherein, if the UE is within the first area while performing cell re-selection, determining, on the basis of the PCI list and the cell global identifier list configured at the network side, whether the cell to be re-selected belongs to the first area, comprises:
if the UE is within the first area and a timer has not expired, determining whether a PCI of the cell is in the PCI list configured at the network side while performing the cell re-selection; and
if the PCI of the cell is not in the PCI list, determining that the cell does not belong to the first area.

3. The method according to claim 1, wherein, if the UE is within the first area while performing cell re-selection, determining, on the basis of the PCI list and the cell global identifier list configured at the network side, whether the cell to be re-selected belongs to the first area, comprises:
if the UE is within the first area and a timer has not expired, determining whether a PCI of the cell is in the PCI list configured at the network side, and determining whether a cell global identifier of the cell is same as the cell global identifier configured at the network side while performing the cell re-selection; and
if the PCI of the cell is in the PCI list configured at the network side, and the cell global identifier of the cell is the same as the cell global identifier configured at the network side, determining that the cell belongs to the first area.

4. The method according to claim 1, wherein, the method further comprises:
when performing the cell re-selection, if a reselected cell is not within the first area and/or a timer expires, determining that the UE leaves the first area.

5. The method according to any one of claims 1 to 4, wherein, the method further comprises:
obtaining the PCI list and the cell global identifier list configured at the network side through radio resource control, RRC, signaling.

6. The method according to any one of claims 1 to 4, wherein, the first area is one of the following:
an active area and an inactive area.

7. A measurement control method, applied to a network apparatus, wherein the method comprises:
receiving, from a user equipment, UE, that is within a first area while performing cell re-selection, information of a cell where physical cell identifier, PCI, confusion occurs, wherein, the information of the cell where the PCI confusion occurs comprises at least: a PCI and a cell global identifier of the cell;
configuring the UE with a PCI list and a cell global identifier list, in order to allow the UE to determine on the basis of the PCI list and the cell global identifier list, whether a cell to be re-selected belongs to the first area.

8. The method according to claim 7, wherein, the method further comprises:
configuring the UE with the PCI list and the cell global identifier list through radio resource control, RRC, signaling.

9. A user equipment, UE, comprising a first processing unit (31), adapted to perform steps according to any one of claims 1 to 6.

10. A network apparatus, comprising a second communication unit (42), adapted to perform steps of the method according to any one of claims 7 to 8.

11. A computer storage medium, storing computer-executable instructions, and when the computer-executable instructions are executed, steps of the method of any one of claims 1 to 8 are implemented.

## Patentansprüche

1. Messsteuerungsverfahren, angewendet auf ein Benutzergerät, UE, wobei das Verfahren Folgendes umfasst:
wenn sich das UE während einer Durchführung einer Zellenneuauswahl innerhalb eines ersten Bereichs befindet, Senden, an eine Netzseite, von Informationen einer Zelle, in der eine Physische-Zellenkennung- bzw. PCI(Physical-Cell-Identifier)-Konfusion auftritt, wobei die Informationen der Zelle, in der die PCI-Konfusion auftritt, mindestens Folgendes umfassen: eine PCI und eine globale Zellenkennung der Zelle,
Empfangen einer PCI-Liste und einer Globale-Zellenkennung-Liste, konfiguriert auf der Netzseite,
Bestimmen (101), auf der Grundlage der PCI-Liste und der Globale-Zellenkennung-Liste, ob eine neuauszuwählende Zelle zu dem ersten Bereich gehört; und
wenn bestimmt wird, dass die neuauszuwählende Zelle zu dem ersten Bereich gehört, Fortsetzen des Verwendens (102) einer durch dedizierte Signalisierung konfigurierten Bereitschaftszustandsmesskonfiguration zum Durchführen einer Verarbeitung.

2. Verfahren nach Anspruch 1, wobei das Bestimmen, wenn sich das UE während einer Durchführung einer Zellenneuauswahl innerhalb des ersten Bereichs befindet, auf der Grundlage der PCI-Liste und der Globale-Zellenkennung-Liste, konfiguriert auf der Netzseite, ob die neuauszuwählende Zelle zu dem ersten Bereich gehört, Folgendes umfasst:
wenn sich das UE innerhalb des ersten Bereichs befindet und ein Timer nicht abgelaufen ist, Bestimmen, ob sich eine PCI der Zelle in der auf der Netzseite konfigurierten PCI-Liste befindet, während einer Durchführung der Zellenneuauswahl; und
wenn sich die PCI der Zelle nicht in der PCI-Liste befindet, Bestimmen, dass die Zelle nicht zu dem ersten Bereich gehört.

3. Verfahren nach Anspruch 1, wobei das Bestimmen, wenn sich das UE während einer Durchführung einer Zellenneuauswahl innerhalb des ersten Bereichs befindet, auf der Grundlage der PCI-Liste und der Globale-Zellenkennung-Liste, konfiguriert auf der Netzseite, ob die neuauszuwählende Zelle zu dem ersten Bereich gehört, Folgendes umfasst:
wenn sich das UE innerhalb des ersten Bereichs befindet und ein Timer nicht abgelaufen ist, Bestimmen, ob sich eine PCI der Zelle in der auf der Netzseite konfigurierten PCI-Liste befindet, und Bestimmen, ob eine globale Zellenkennung der Zelle die gleiche wie die auf der Netzseite konfigurierte globale Zellenkennung ist, während einer Durchführung der Zellenneuauswahl; und
wenn sich die PCI der Zelle in der auf der Netzseite konfigurierten PCI-Liste befindet und die globale Zellenkennung der Zelle die gleiche wie die auf der Netzseite konfigurierte globale Zellenkennung ist, Bestimmen, dass die Zelle zu dem ersten Bereich gehört.

4. Verfahren nach Anspruch 1, wobei das Verfahren ferner Folgendes umfasst:
bei Durchführung der Zellenneuauswahl, wenn sich eine neuausgewählte Zelle nicht innerhalb des ersten Bereichs befindet und/oder ein Timer abläuft, Bestimmen, dass das UE den ersten Bereich verlässt.

5. Verfahren nach einem der Ansprüche 1 bis 4, wobei das Verfahren ferner Folgendes umfasst:
Erhalten der PCI-Liste und der Globale-Zellenkennung-Liste, konfiguriert auf der Netzseite, über eine Funkressourcensteuerungs- bzw. RRC(Radio-Resource-Control)-Signalisierung.

6. Verfahren nach einem der Ansprüche 1 bis 4, wobei der erste Bereich Folgendes ist:
ein aktiver Bereich oder ein inaktiver Bereich.

7. Messsteuerungsverfahren, angewendet auf eine Netzeinrichtung, wobei das Verfahren Folgendes umfasst:
Empfangen, von einem Benutzergerät, UE, das sich während einer Durchführung einer Zellenneuauswahl innerhalb eines ersten Bereichs befindet, von Informationen einer Zelle, in der eine Physische-Zellenkennung- bzw. PCI(Physical-Cell-Identifier)-Konfusion auftritt, wobei die Informationen der Zelle, in der die PCI-Konfusion auftritt, mindestens Folgendes umfassen: eine PCI und eine globale Zellenkennung der Zelle;
Konfigurieren des UE mit einer PCI-Liste und einer Globale-Zellenkennung-Liste, um zu ermöglichen, dass das UE auf der Grundlage der PCI-Liste und der Globale-Zellenkennung-Liste bestimmt, ob eine neuauszuwählende Zelle zu dem ersten Bereich gehört.

8. Verfahren nach Anspruch 7, wobei das Verfahren ferner Folgendes umfasst:
Konfigurieren des UE mit der PCI-Liste und der Globale-Zellenkennung-Liste über eine Funkressourcensteuerungs- bzw. RRC(Radio-Resource-Control)-Signalisierung.

9. Benutzergerät, UE, das eine erste Verarbeitungseinheit (31) umfasst, die zum Durchführen von Schritten nach einem der Ansprüche 1 bis 6 eingerichtet ist.

10. Netzeinrichtung, die eine zweite Kommunikationseinheit (42) umfasst, die zum Durchführen von Schritten des Verfahrens nach einem der Ansprüche 7 bis 8 eingerichtet ist.

11. Computerspeichermedium, das computerausführbare Anweisungen speichert, und wobei bei Ausführung der computerausführbaren Anweisungen Schritte des Verfahrens nach einem der Ansprüche 1 bis 8 implementiert werden.

## Revendications

1. Procédé de commande de mesure, appliqué à un équipement utilisateur, UE, le procédé comprenant :
si l'UE se trouve dans une première zone pendant qu'il effectue une resélection de cellule, l'envoi à un côté réseau d'informations d'une cellule où se produit une confusion d'identifiant de cellule physique, PCI, dans lequel, les informations de la cellule où se produit la confusion PCI comprennent au moins : un PCI et un identifiant global de cellule de la cellule,
la réception d'une liste de PCI et d'une liste d'identifiants globaux de cellule configurées côté réseau,
la détermination (101), sur la base de la liste de PCI et de la liste d'identifiants globaux de cellule, du fait de savoir si une cellule à resélectionner appartient à la première zone ; et
s'il est déterminé que la cellule à resélectionner appartient à la première zone, la poursuite de l'utilisation (102) d'une configuration de mesure d'état de repos configurée par une signalisation dédiée pour effectuer un traitement.

2. Procédé selon la revendication 1, dans lequel, si l'UE se trouve dans la première zone pendant qu'il effectue une resélection de cellule, la détermination, sur la base de la liste de PCI et de la liste d'identifiants globaux de cellule configurées côté réseau, du fait de savoir si la cellule à resélectionner appartient à la première zone, comprend :
si l'UE se trouve dans la première zone et si une temporisation n'a pas expiré, la détermination du fait de savoir si un PCI de la cellule se trouve dans la liste de PCI configurée côté réseau pendant qu'il effectue une resélection de cellule ; et
si le PCI de la cellule ne se trouve pas dans la liste de PCI, la détermination du fait que la cellule n'appartient pas à la première zone.

3. Procédé selon la revendication 1, dans lequel, si l'UE se trouve dans la première zone pendant qu'il effectue une resélection de cellule, la détermination, sur la base de la liste de PCI et de la liste d'identifiants globaux de cellule configurée côté réseau, du fait de savoir si la cellule à resélectionner appartient à la première zone, comprend :
si l'UE se trouve dans la première zone et si une temporisation n'a pas expiré, la détermination du fait de savoir si un PCI de la cellule se trouve dans la liste de PCI configurée côté réseau, et la détermination du fait de savoir si un identifiant global de cellule de la cellule est identique à l'identifiant global de cellule configuré côté réseau pendant qu'il effectue une resélection de cellule ; et
si le PCI de la cellule se trouve dans la liste de PCI configurée côté réseau, et si l'identifiant global de cellule est identique à l'identifiant global de cellule configuré côté réseau, la détermination du fait que la cellule appartient à la première zone.

4. Procédé selon la revendication 1, dans lequel le procédé comprend en outre :
lorsque la resélection de cellule est effectuée, si une cellule resélectionnée ne se trouve pas dans la première zone et/ou si une temporisation expire, la détermination du fait que l'UE quitte la première zone.

5. Procédé selon l'une quelconque des revendications 1 à 4, dans lequel le procédé comprend en outre :
l'obtention de la liste de PCI et de la liste d'identifiants globaux de cellules configurées côté réseau par l'intermédiaire d'une signalisation de commande de ressources radio, RRC.

6. Procédé selon l'une quelconque des revendications 1 à 4, dans lequel la première zone est l'une des suivantes :
une zone active et une zone inactive.

7. Procédé de commande de mesure, appliqué à un appareil de réseau, dans lequel le procédé comprend :
la réception, en provenance d'un équipement utilisateur, UE, qui se trouve dans une première zone pendant qu'il effectue une resélection de cellule, d'informations d'une cellule où se produit une confusion d'identifiant de cellule physique, PCI, dans lequel les informations de la cellule où se produit la confusion de PCI comprennent au moins : un PCI et un identifiant global de cellule de la cellule ;
la configuration de l'UE avec une liste de PCI et une liste d'identifiants globaux de cellules, afin de permettre à l'UE de déterminer, sur la base de la liste de PCI et de la liste d'identifiants globaux de cellules, si une cellule à resélectionner appartient à la première zone.

8. Procédé selon la revendication 7, dans lequel le procédé comprend en outre :
la configuration de l'UE avec la liste de PCI et la liste d'identifiants globaux de cellule par l'intermédiaire d'une signalisation de commande de ressources radio, RRC.

9. Équipement utilisateur, UE, comprenant une première unité de traitement (31), conçue pour effectuer des étapes selon l'une quelconque des revendications 1 à 6.

10. Appareil de réseau, comprenant une deuxième unité de communication (42), conçue pour effectuer des étapes du procédé selon l'une quelconque des revendications 7 à 8.

11. Support de stockage informatique, stockant des instructions exécutables par ordinateur, de telle sorte que lorsque les instructions exécutables par ordinateur sont exécutées, les étapes du procédé selon l'une quelconque des revendications 1 à 8 sont mises en œuvre.
